(19) Europäisches Patentamt
European Patent Office
Office européen des brevets

(11) Veröffentlichungsnummer : **0 074 926**
**B1**

(12) # EUROPÄISCHE PATENTSCHRIFT

(45) Veröffentlichungstag der Patentschrift : **07.08.85**

(51) Int. Cl.[4] : **C 09 B 23/16**, C 09 B 69/06, C 08 K 5/34

(21) Anmeldenummer : **82810373.9**

(22) Anmeldetag : **06.09.82**

(54) **Farbsalze.**

(30) Priorität : **11.09.81 CH 5899/81**

(43) Veröffentlichungstag der Anmeldung : **23.03.83 Patentblatt 83/12**

(45) Bekanntmachung des Hinweises auf die Patenterteilung : **07.08.85 Patentblatt 85/32**

(84) Benannte Vertragsstaaten : **CH DE FR GB IT LI**

(56) Entgegenhaltungen :
**EP-A- 0 029 136**
**EP-A- 0 038 299**
**GB-A- 2 022 099**

(73) Patentinhaber : **CIBA-GEIGY AG**
**Postfach**
**CH-4002 Basel (CH)**

(72) Erfinder : **Stingelin, Willy**
**Stockackerstrasse 1A**
**CH-4153 Reinach (CH)**
Erfinder : **Loew, Peter, Dr.**
**Concordiastrasse 23**
**CH-4142 Münchenstein (CH)**

**EP 0 074 926 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

## Beschreibung

Die Erfindung betrifft neue Farbsalze der Formel I

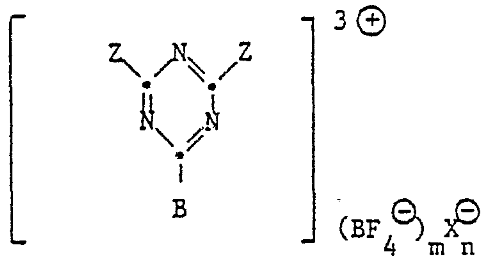

(I)

worin bedeuten :

Z einen Rest der Formel

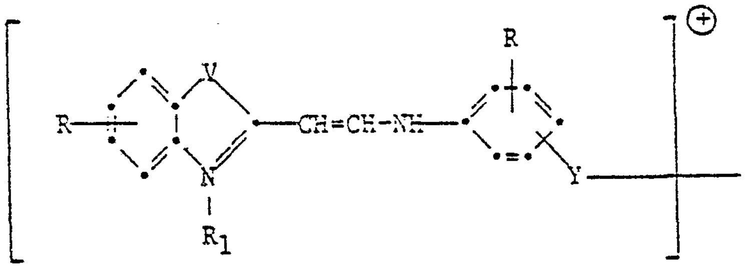

B das gleiche wie Z oder einen von Z verschiedenen kationischen Rest,

R Wasserstoff, gegebenenfalls substituiertes $C_1$-$C_4$-Alkyl, gegebenenfalls substituiertes $C_1$-$C_4$ Alkoxy, die $NO_2$-Gruppe, gegebenenfalls substituiertes Acylamino, Halogen oder die CN-Gruppe ;

$R_1$ gegebenenfalls substituiertes $C_1$-$C_4$ Alkyl oder $C_3$-$C_4$ Alkenyl ;

V ein Schwefelatom oder die Gruppe

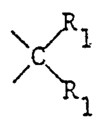

wobei beide Reste $R_1$ miteinander zu einem carbocyclischen 5- oder 6-Ring verknüpft sein können ;

Y —NH—, —NR$_1$—, —O— oder —S— ; und

X ein anderes Anion als $BF_4^{\ominus}$, m 1-3, n 0-2 (vorausgesetzt daß m + n = 3) bedeuten.

Bedeutet B einen von Z verschiedenen kationischen Rest, so kommen z. B. Reste der folgenden Strukturen in Frage :

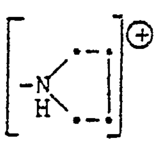 , 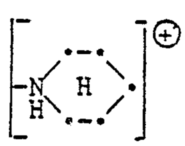 , 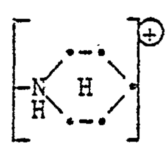 , oder 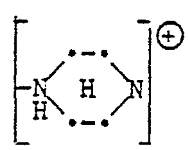

und insbesondere Reste der Formeln :

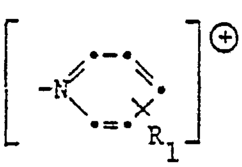 , 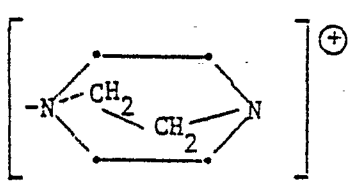 , $\left[-NH(CH_2)_p-N(R_1)_3\right]^{\oplus}$ ,

$\left[-NH(CH_2)_p-NH(R_1)_2\right]^{\oplus}$ , $\left[-N(R_1)_3\right]^{\oplus}$ oder 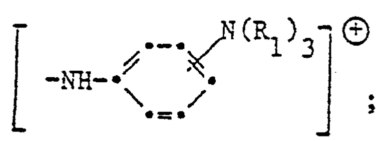 ;

worin $R_1$ die angegebene Bedeutung hat und p die Zahl 2 oder 3 ist.

R in der Bedeutung einer gegebenenfalls substituierten $C_1$-$C_4$ Alkylgruppe stellt eine unverzweigte oder verzweigte Alkylgruppe dar wie z. B. eine Methyl-, Aethyl-, n- oder iso-Propyl- oder n-, sek- oder tert. Butylgruppe ; diese Gruppen können substituiert sein z. B. durch eine $C_1$-$C_4$ Alkoxygruppe wie die Methoxy-, Aethoxy-, n- und iso-Propoxygruppe oder n- und iso-Butoxygruppe ; durch CN, durch Halogen wie Fluor, Chlor oder Brom, durch Phenyl (seinerseits gegebenenfalls weitersubstituiert durch z. B. Halogen, Alkyl und/oder Alkoxy), durch $CONH_2$ oder durch eine am N-Atom mono- oder disubstituierte (z. B. durch $C_1$-$C_4$ Alkyl) Carbonsäureamidgruppe.

Bedeutet R eine gegebenenfalls substituierte $C_1$-$C_4$ Alkoxygruppe, so handelt es sich um eine unverzweigte oder verzweigte Alkoxygruppe wie z. B. um die Methoxy-, Aethoxy-, n- und iso-Propoxy- oder n- und iso-Butoxygruppe, welche Gruppen weitersubstituiert sein können.

Handelt es sich bei R um eine Acylaminogruppe, so kommt z. B. die Benzoylamino- oder Acetylaminogruppe in Frage. Die Acylaminogruppe kann substituiert sein durch z. B. Halogen wie Fluor, Chlor oder Brom oder durch eine $NH_2$-Gruppe oder durch eine am N-Atom durch beispielsweise $C_1$-$C_4$-Alkyl mono- oder disubstituierte Aminogruppe.

Bedeutet R ein Halogenatom, so handelt es sich vor allem um das Fluor-, Chlor- oder Bromatom.

Es ist aber auch möglich, dass der Substituent R mehrmals in ein und demselben Benzolring vorkommen kann.

In den bevorzugten kationischen Verbindungen der Formel I bedeutet R Wasserstoff oder eine unsubstituierte, unverzweigte $C_1$-$C_4$ Alkylgruppe, insbesondere die Methylgruppe oder eine unsubstituierte, unverzweigte Alkoxygruppe, vor allem die Methoxygruppe oder Halogen, insbesondere Chlor.

Bedeutet $R_1$ eine gegebenenfalls substituierte $C_1$-$C_4$ Alkylgruppe, so handelt es sich um eine unverzweigte oder verzweite Alkylgruppe wie z. B. um die Methyl-, n- und iso-Propyl- oder n- und iso-Butylgruppe ; diese Gruppen können substituiert sein, beispielsweise durch $C_1$-$C_4$-Alkoxy (unverzweigt und verzweigt wie Methoxy-, Aethoxy-, n- und iso-Propoxy) durch CN oder Halogen (Fluor, Chlor oder Brom), durch gegebenenfalls durch $C_1$-$C_4$ Alkyl oder Halogen substituiertes Phenyl oder durch die $CONH_2$-Gruppe. Bedeutet $R_1$ eine Alkenylgruppe, so kommt beispielsweise die Allylgruppe in Frage.

In den bevorzugten kationischen Verbindungen der Formel I bedeutet $R_1$ eine unsubstituierte, unverzweigte $C_1$-$C_4$ Alkylgruppe, vor allem die $CH_3$-Gruppe.

Bedeutet V die

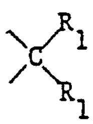 -Gruppierung,

wo beide Reste $R_1$ miteinander zu einem carbocyclischen 5- oder 6-Ring verknüpft sein können, so handelt es sich vor allem um den unsubstituierten Cyclopentan- oder Cyclohexanring.

In den bevorzugten kationischen Verbindungen der Formel I bedeutet V die

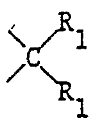 -Gruppierung,

worin $R_1$ je einen unverzweigten, unsubstituierten $C_1$-$C_4$-Alkylrest darstellt ; insbesondere bedeutet V die

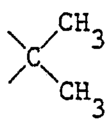 -Gruppierung.

Y in der Bedeutung einer —$NR_1$-Gruppe stellt eine —N—($C_1$-$C_4$)-alkyl-Gruppe dar wie die —N · $CH_3$—, —N · $C_2H_5$—, —N · $C_3H_7$-Gruppe, worin der Alkylrest noch substituiert sein kann, vor allem durch CN oder Halogen.

In den bevorzugten kationischen Verbindungen der Formel I bedeutet Y die —NH— oder —$NR_1$-Gruppe, insbesondere die —N · $CH_3$-Gruppe.

B in der Bedeutung einer

$$\left[-NH(CH_2)_p-N(R_1)_3\right]^{\oplus}$$

oder

$$\left[-NH(CH_2)_p-NH(R_1)_2\right]^{\oplus}$$

Gruppe stellt beispielsweise folgende Gruppen dar :

$-NH-CH_2-CH_2-N^{\oplus}(CH_3)_3$,

$-NH-CH_2-CH_2-N^{\oplus}(C_2H_5)_3$,

$-NH-CH_2-CH_2-N^{\ominus}(iso\text{-}C_3H_7)_3$,

$-NH-CH_2-CH_2-N^{\oplus}(n\text{-}C_3H_7)_3$,

$-NH-CH_2-CH_2-\overset{\oplus}{N}H(CH_3)_2$ ,

$-NH-CH_2-CH_2-\overset{\oplus}{N}H(C_2H_5)_2$ ,

$-NH-CH_2-CH_2-\overset{\oplus}{N}H(n\text{-}C_3H_7)_2$ ,

$-NH-CH_2-CH_2-\overset{\oplus}{N}H(iso\text{-}C_3H_7)_2$ ,

$-NH-CH_2-CH_2-\overset{\oplus}{N}H(n\text{-}C_4H_9)_2$ ,

$-NH-CH_2-CH_2-\overset{\oplus}{N}H(tert.\text{-}C_4H_9)_2$ ,

$-NH-CH_2-CH_2-\overset{\ominus}{N}(CH_3)(C_2H_5)_2$

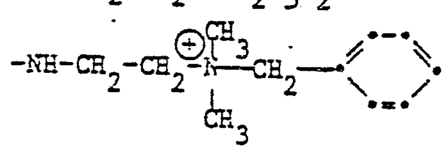

$-NH-CH_2-CH_2-\overset{\oplus}{N}H(C_2H_5)_2$ ,

$-NH-CH_2-CH_2-\overset{\ominus}{N}H(n\text{-}C_3H_7)_2$ ,

$-NH-CH_2-CH_2-\overset{\oplus}{N}H(iso\text{-}C_3H_7)_2$ ,

$-NH-CH_2-CH_2-\overset{\ominus}{N}H(n\text{-}C_4H_9)_2$ ,

$-NH-CH_2-CH_2-\overset{\oplus}{N}H(tert.\text{-}C_4H_9)_2$ ,

$-NH-CH_2-CH_2-\overset{\ominus}{N}(CH_3)(C_2H_5)_2$

$-NH-CH_2-CH_2-CH_2-N^{\oplus}(CH_3)_3$,

$-NH-CH_2-CH_2-CH_2-N^{\ominus}(C_2H_5)_3$,

$-NH-CH_2-CH_2-CH_2-N^{\ominus}(iso\text{-}C_3H_7)_3$,

$-NH-CH_2-CH_2-CH_2-N^{\ominus}(n\text{-}C_3H_7)_3$ ,

$-NH-CH_2-CH_2-CH_2-\overset{\oplus}{N}H(CH_3)_2$ ,

$-NH-CH_2-CH_2-CH_2-\overset{\oplus}{N}H(C_2H_5)_2$ ,

$-NH-CH_2-CH_2-CH_2-\overset{\oplus}{N}H(n\text{-}C_3H_7)_2$ ,

$-NH-CH_2-CH_2-CH_2-\overset{\oplus}{N}H(iso\text{-}C_3H_7)_2$ ,

$-NH-CH_2-CH_2-CH_2-\overset{\oplus}{N}H(n\text{-}C_4H_9)_2$ ,

$-NH-CH_2-CH_2-CH_2-\overset{\oplus}{N}H(tert.C_4H_9)_2$ ,

$-NH-CH_2-CH_2-CH_2-\overset{\oplus}{N}(CH_2CN)_3$ ,

$-NH-CH_2-CH_2-CH_2-\overset{\oplus}{N}(CH_3)(C_2H_5)_2$

$-NH-CH_2-CH_2-CH_2-\overset{\ominus}{N}H(C_2H_5)_2$ ,

$-NH-CH_2-CH_2-CH_2-\overset{\ominus}{N}H(n\text{-}C_3H_7)_2$ ,

$-NH-CH_2-CH_2-CH_2-\overset{\ominus}{N}H(iso\text{-}C_3H_7)_2$ ,

$-NH-CH_2-CH_2-CH_2-\overset{\ominus}{N}H(n\text{-}C_4H_9)_2$ ,

$-NH-CH_2-CH_2-CH_2-\overset{\ominus}{N}H(tert.C_4H_9)_2$ ,

$-NH-CH_2-CH_2-CH_2-\overset{\ominus}{N}(CH_2CN)_3$ ,

(Fortsetzung)

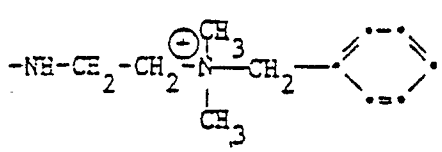

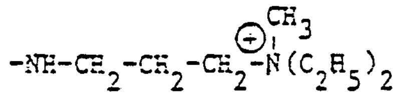

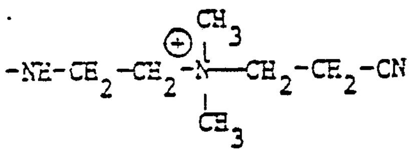

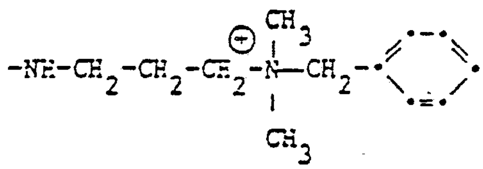

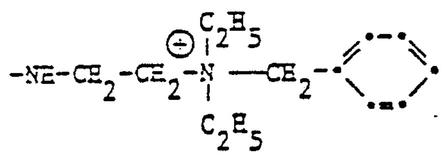

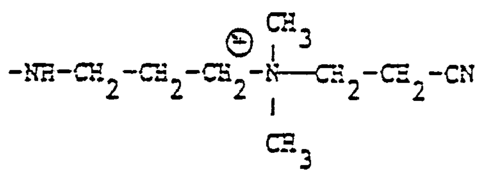

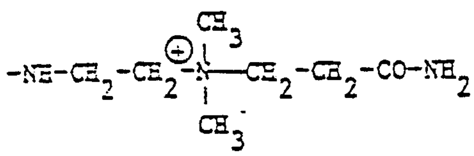

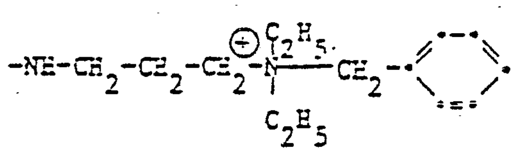

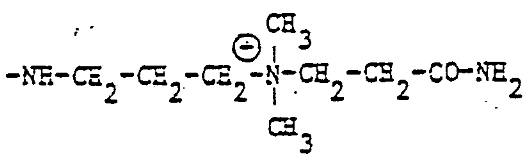

In der Bedeutung einer $[-N(R_1)_3]^{\oplus}$ Gruppe stellt B beispielsweise die folgenden Gruppen dar:

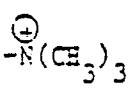 , 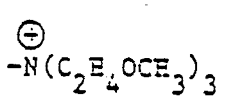 , 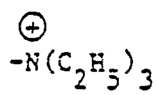 , 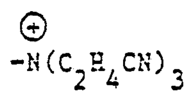 ,

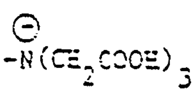 , 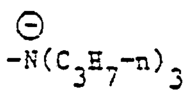 , 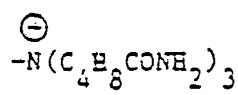 , 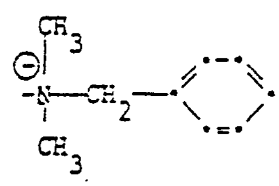

In bevorzugten kationischen Verbindungen der Formel I hat B die gleiche Bedeutung wie Z oder stellt eine der Gruppen

$$[-NH(CH_2)_p-N^{\oplus}(R_1)_3] \quad \text{oder} \quad [-NH(CH_2)_p-NH^{\oplus}(R_1)_2]$$

dar, worin

p und $R_1$ die angegebene Bedeutung haben.

Als Anionen X kommen sowohl anorganische wie organische Anionen in Frage; beispielsweise sind genannt: Halogen, wie Chlorid-, Bromid- oder Jodid-, Sulfat-, Methylsulfat-, Aminosulfat-, Perchlorat-, Thiocyanat, Carbonat-, Bicarbonat-, Phosphat-, Phosphormolybdat-, Phosphorwolframat-, Phosphorwolframmolybdat-, Benzolsulfonat-, Naphthalinsulfonat-, 4-Chlorbenzolsulfonat-, Oxalat-, Maleinat-, Formiat-, Acetat-, Propionat-, Lactat-, Succinat-, Chloracetat-, Tartrat-, Methansulfonat- oder Benzoationen.

Bevorzugte Anionen X sind das Formiat-, Acetat-, Chlorid-, Sulfat- und Phosphation.

Die neuen Farbsalze erhält man zweckmässig durch Umsetzen der wässrigen Lösung eines Farbsalzes der Formel

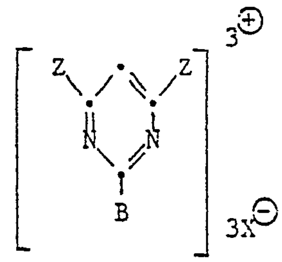

(II)

worin $X^{\ominus}$ ein wasserlöslich machendes Anion bedeutet, mit Natriumtetrafluoroborat. Als wasserlöslich machende Anionen dienen vorzugsweise die Chloride, Bromide, Sulfate, Methylsulfate, Alkylsulfate, Formiate oder Acetate. Dank ihrer Schwerlöslichkeit fallen die Tetrafluorborate aus und können durch Abfiltrieren isoliert werden.

Jene Verbindungen der Formel (II), worin B mit Z identisch ist, können erhalten werden durch Kondensation von 1 Mol eines Triamins der Formel (III)

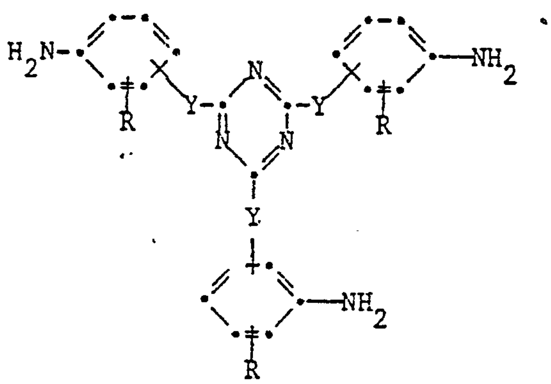

(III)

mit 3 Mol eines Aldehydes der Formel IV

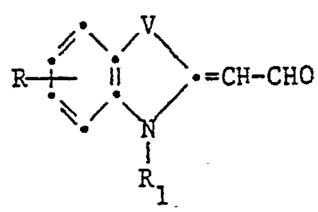

(IV)

in Gegenwart einer Säure HX.

Jene Verbindungen der Formel (II), worin B nicht mit Z identisch ist, erhält man durch Kondensation von 1 Mol eines Diamins der Formel V

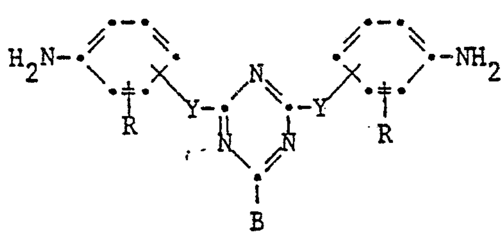

(V)

mit 2 Mol eines Aldehydes der Formel (IV) in Gegenwart einer Säure HX.

Die Diamine der Formel (V) und die Triamine der Formel (III) sind bekannt oder können nach bekannten Methoden hergestellt werden. Beispielsweise erhält man die Diamine der Formel V derart, dass man im sym. Trichlortriazin die Chloratome stufenweise mit Verbindungen der Formel

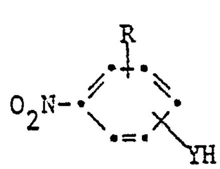

und mit B-H umsetzt und anschliessend im Kondensationsprodukt die $NO_2$-Gruppe zur $NH_2$-Gruppe reduziert.

Auch bei den Aldehyden der Formel (IV) handelt es sich um bekannte Verbindungen, beispielsweise

1,3,3-Trimethyl-2-methylen-indolin-ω-aldehyd
1,3,3-Trimethyl-5-chlor-2-methylen-indolin-ω-aldehyd
1,3,3-Trimethyl-5-phenyl-2-methylen-indolin-ω-aldehyd und
1,3,3-Trimethyl-5-cyan-2-methylen-indolin-ω-aldehyd.

Die Kondensation des Diamins der Formel (V) bzw. des Triamins der Formel (III) mit dem Aldehyd der Formel (IV) erfolgt nach bekannter Art und Weise, z. B. in wässrigem Medium bei einer Temperatur von etwa 0° bis 100 °C in Gegenwart einer Säure HX. Bei dieser Säure HX handelt es sich z. B. um eine organische Säure, wie Essigsäure oder eine Arylsulfonsäure, vor allem Benzolsulfonsäure oder um eine anorganische Säure, wie Salzsäure, Schwefelsäure oder Phosphorsäure.

Nach der Kondensationsreaktion werden die neuen kationischen Verbindungen gegebenenfalls vom Reaktionsmedium getrennt und getrocknet.

Die neuen Farbsalze eignen sich hervorragend zum Färben von Polyacrylnitril in der Spinnmasse.

Für die Anwendung werden die erfindungsgemässen Farbsalze zweckmässig in dem zum Lösen des Polyacrylnitrils verwendeten Lösungsmittel, wie Dimethylformamid, Dimethylacetamid oder Dimethylsulfoxid, gelöst, dann der Spinnlösung zugegeben, das Gemisch homogenisiert und dann in der üblichen Weise, wie beispielsweise nach dem Trocken-Spinnverfahren, oder nach dem Nass-Spinn-Verfahren, verspinnt und die so hergestellten Fasern wie üblich behandelt.

Die erfindungsgemässen Farbsalze besitzen in den genannten Lösungsmitteln bereits bei Raumtemperatur eine sehr hohe Löslichkeit, so dass sie vorteilhaft auch in Form von konzentrierten Lösungen, die vorzugsweise etwa 5 bis 40 Gew.% Farbstoff enthalten, eingesetzt werden können, wobei durch Temperaturerhöhung die Löslichkeit der Farbstoffe nochmals beträchtlich gesteigert werden kann. Zudem besitzen sie dank des relativ kleinen Anions eine hohe Farbstärke, was ein ökonomisches Färben erlaubt.

Ausser den Polymeren des Acrylnitrils kommen als zu verspinnendes Substrat Mischpolymerisate des Acrylnitrils mit anderen Vinyl-Verbindungen, wie beispielsweise mit Vinylchlorid, Vinylfluorid, Vinylidenchlorid, Vinylacetat oder -propionat, Vinylpyridin, Vinylimidazol, Vinylpyrrolidon, Vinylalkohol, Acryl- oder Methacrylsäureestern oder Acrylamiden in Betracht, wobei diese Mischpolymerisate mindestens 70 Gew.% an Acrylnitril aufweisen müssen und weiterhin saure Gruppen enthalten, die als Endgruppen in das Polymere mittels eines Katalysators eingeführt oder mittels solche saure Gruppen enthaltenden Comonomeren einpolymerisiert oder aufgepfropft wurden.

Nach dem erfindungsgemässen Verfahren erhält man völlig transparente, stippenfreie Spinnlösusngen, die keine Verstopfung oder mechanische Abnutzung des Spinndüsen verursachen. Die beim Verspinnen erhaltenen Fäden bzw. Fasern zeigen durch die weitgehend molekulardisperse Verteilung des erfindungsgemäss verwendeten Farbstoffes im Gegensatz zu den zur Zeit meistens eingesetzten Farbpigmenten keine Mattierungserscheinungen. Weiterhin besitzen die mit dem erfindungsgemäss verwendeten Farbstoff gemäss dem erfindungsgemässen Verfahren gefärbten Materialien eine sehr hohe Nassechtheit. Durch das Fehlen von Farbstoff-Aggregaten an den Faseroberflächen, wie sie beim Spinnfärben mit Farbpigmenten auftreten können, besitzen die erfindungsgemäss erhaltenen Fasern ebenfalls eine ausserordentlich gute Reibechtheit. Ausserdem ist allgemein die ausgezeichnete Thermofixierechtheit, Dämpf- und Wasch- und Lichtechtheit der so gefärbten Fasern hervorzuheben.

Da sich die erfindungsgemäss verwendeten Tetrafluorborat-Farbstoffsalze aus den wässrigen Lösungen, wie sie bei der Farbstoffsynthese entstehen, sehr gut in grobkristalliner Form und weitgehend salzfrei abscheiden lassen, hat die Verwendung von Spinnlösungen, die diese Farbstoffe enthalten, den besonderen Vorteil, dass anorganische Begleitsalze in den als Spinnflüsigkeit verwendeten aprotischen Lösungsmitteln vor dem Verspinnen nicht erst abgetrennt werden müssen, so dass insbesondere zusätzliche verfahrenstechnische Massnahmen vermieden werden. Die überraschend geringe Wasserlöslichkeit der erfindungsgemässen Farbsalze ist ein weiterer Vorteil im Hinblick auf das Ausbluten des Farbsalzes im wässrigen Fällbad.

## Beispiel 1

8,6 T (20 mMol) 2,4,6-s-Tri-(4'-aminophenylamino)-triazin und 12,7 T (63 mMol) 1,3,3-Trimethyl-2-methylenindolin-ω-aldehyd werden in 50 T Wasser und 41 T Methanol verrührt. Man erwärmt das Gemisch in ca. 20 bis 30 Minuten auf 60 bis 65° und beginnt gleichzeitig mit dem Zutropfen von 32,8 T 8 %-iger wässriger Salzsäure. Nach 2 1/2 Stunden ist das Zutropfen der Salzsäure beendet. Man rührt noch 1 Stunde bei gleicher Temperatur weiter, entfernt anschliessend das Methanol aus der Reaktionslösung durch Abdestillieren im Vakuum. Der ausgefallene Farbstoff wird mit 200 T Kaltwasser verrührt, abfiltriert, mit wenig Wasser gewaschen und bei 70° getrocknet. Man erhält 20,5 Teile eines orangen Farbsalzes der Formel (VI).

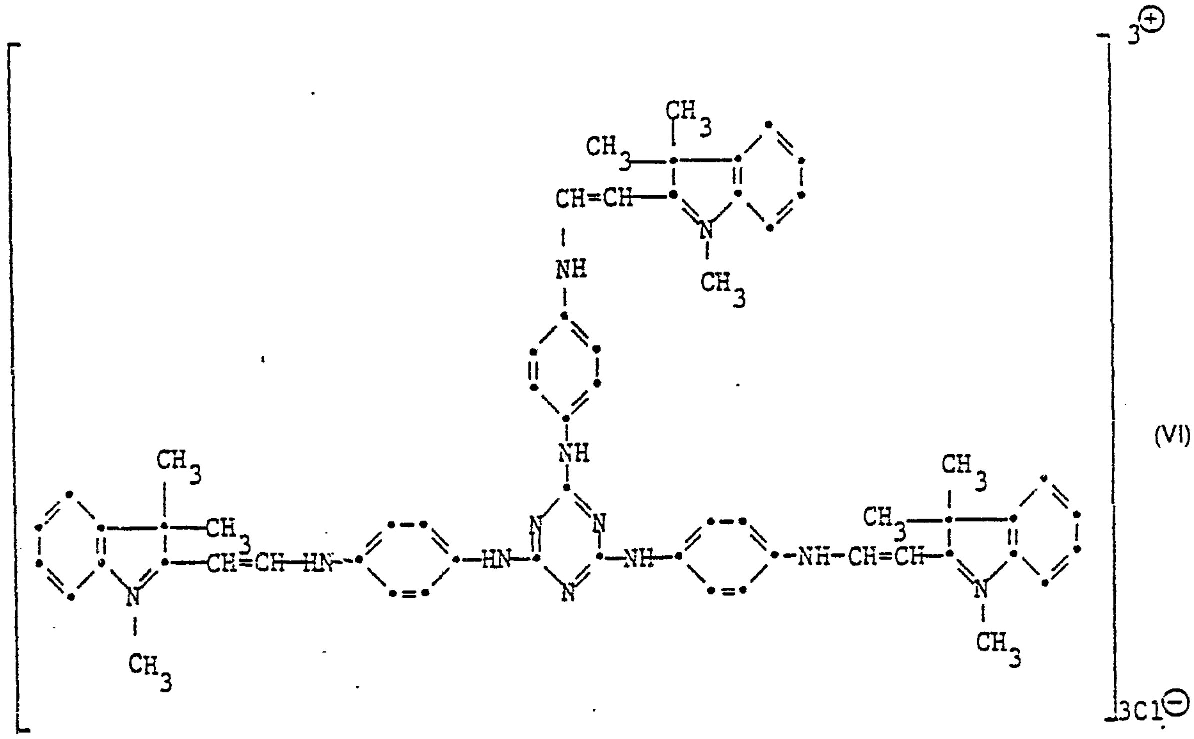

(VI)

Beispiel 2

835 g Dimethylformamidolösung enthaltend 60 g des gemäss Beispiel 1 erhaltenen Farbsalzes der Formel (VI) werden mit 255 g einer wässrigen Lösung, enthaltend 35,5 g $NaBF_4$, versetzt. Durch Verdünnen mit 2 500 ml Wasser fällt das Farbstoffsalz ($X = BF_4$) aus und wird abfiltriert, mit Wasser salzfrei gewaschen und getrocknet. Man erhält 58 g eines gelben Pulvers, welches sich zu 20 Gew.% in DMF löst, aber zu weniger als 0,2 % in Wasser.

Beispiel 3

Zu 100 Teilen einer 30 %igen Lösung eines sauermodifizierten Polyacrylnitrils in Dimethylformamid werden 5 Teile einer 5 %igen Lösung des gemäss Beispiel 1 erhaltenen Farbsalzes in Dimethylformamid gegeben. Die zu verspinnende Lösung wird homogenisiert und nach einem in der Technik üblichen und bekannten Trockenspinnverfahren versponnen.

Man erhält Fäden in einem kräftigen brillanten Gelbton, welche sich zusätzlich durch einen hohen Glanz auszeichnen. Die Echtheiten, insbesondere die Lichtechtheit, Reibechtheit, Thermofixierechtheit, Waschechtheit und Dämpfechtheit sind ausserordentlich hoch.

Führt man die Faserherstellung nach einem in der Technik üblichen Nass-Spinnverfahren durch, erhält man gefärbte Fäden von gleich guten Eigenschaften. Die Fäll- und Verstreckbäder werden nur äusserst geringfügig angefärbt.

**Patentansprüche**

1. Farbsalze der Formel I

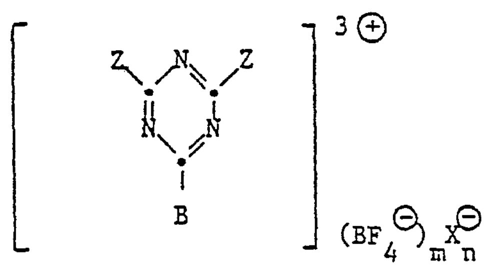

(I)

worin bedeuten

Z einen Rest der Formel

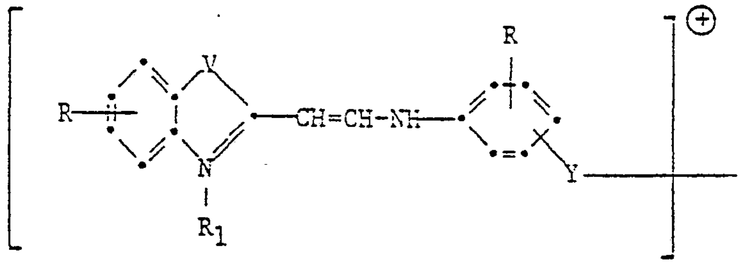

B das gleiche wie Z oder einen von Z verschiedenen kationischen Rest,

R Wasserstoff, gegebenenfalls substituiertes $C_1$-$C_4$-Alkyl, gegebenenfalls substituiertes $C_1$-$C_4$ Alkoxy, die $NO_2$-Gruppe, gegebenenfalls substituiertes Acylamino, Halogen oder die CN-Gruppe ;

$R_1$ gegebenenfalls substituiertes $C_1$-$C_4$ Alkyl oder $C_3$-$C_4$ Alkenyl ;

V ein Schwefelatom oder die Gruppe

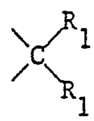

wobei beide Reste $R_1$ miteinander zu einem carbocyclischen 5- oder 6-Ring verknüpft sein können ;

Y —NH, —$NR_1$—, —O— oder —S— ; und

X ein anderes Anion als $BF_4^{\ominus}$ und m 1 bis 3 und n 0 bis 2 (vorausgesetzt daß m + n = 3) bedeuten.

2. Farbsalze gemäss Anspruch 1, dadurch gekennzeichnet, dass die Symbole Z und B die gleichen Reste bedeuten.

3. Farbsalze gemäss Anspruch 1, dadurch gekennzeichnet, dass R Wasserstoff, $CH_3$, $OCH_3$ oder Chlor bedeutet.

4. Farbsalze gemäss Anspruch 1, dadurch gekennzeichnet, dass $R_1$ unsubstituiertes, unverzweigtes $C_1$-$C_4$-Alkyl bedeutet.

5. Farbsalze gemäss Anspruch 1, dadurch gekennzeichnet, dass $R_1$ die $CH_3$-Gruppe bedeutet.

6. Farbsalze gemäss Anspruch 1, dadurch gekennzeichnet, dass V die $>C(CH_3)_2$ Gruppe darstellt.

7. Farbsalze gemäss Anspruch 1, dadurch gekennzeichnet, dass Y die —NH- oder —$NCH_3$-Gruppe darstellt.

8. Farbsalze gemäss Anspruch 1, worin X das Formiat-, Acetat-, Chlorid-, Sulfat- oder Phosphation bedeutet.

9. Verfahren zum Spinnfärben von Polymeren des Acrylnitrils oder Mischpolymeren mit überwiegendem Acrylnitrilanteil, dadurch gekennzeichnet, dass man der Spinnlösung ein Farbsalz gemäss Anspruch 1 zusetzt.

10. Spinngefärbte Fasern von Polymeren des Acrylnitrils oder Mischpolymeren mit überwiegendem Acrylnitrilanteil, enthaltend ein Farbsalz gemäss Anspruch 1.

**Claims**

1. A dye salt of the formula I

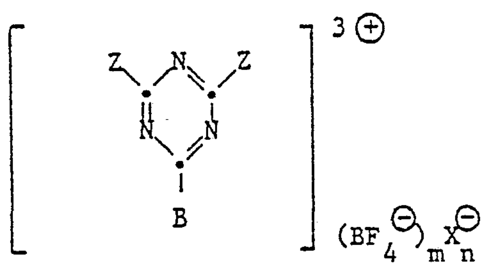

(I)

wherein

Z is a radical of the formula

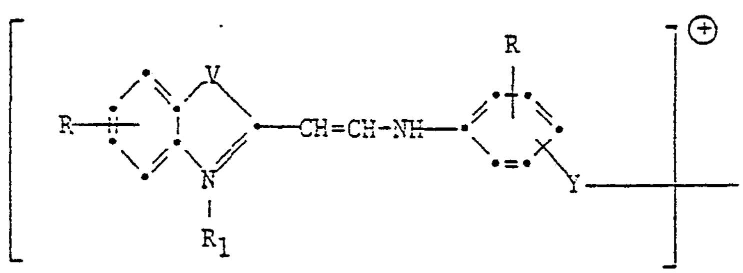

B has the same meaning as Z or is a cationic radical which differs from Z,

R is hydrogen, unsusbstituted or substituted $C_1$-$C_4$ alkyl, unsubstituted or substituted $C_1$-$C_4$ alkoxy, the $—NO_2$ group, unsubstituted or substituted acylamino, or is halogen or the —CN group,

$R_1$ is unsubstituted or substituted $C_1$-$C_4$ alkyl or is $C_3$-$C_4$ alkenyl,

V is a sulfur atom or the group

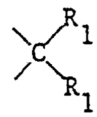

wherein both radicals $R_1$ may be linked together to form a carboxylic 5- or 6-membered ring, and

Y is —NH—, $—NR_1$, —O— or —S— ;

X is an anion other than $BF_4^{\ominus}$, m is 1 to 3, and n is 0 to 2, provided that the sum of m + n is 3.

2. A dye salt according to claim 1, wherein Z and B are identical radicals.

3. A dye salt according to claim 1, wherein R is hydrogen, $CH_3$, $OCH_3$ or chlorine.

4. A dye salt according to claim 1, wherein $R_1$ is unsubstituted, unbranched $C_1$-$C_4$ alkyl.

5. A dye salt according to claim 1, wherein $R_1$ is the $—CH_3$ group.

6. A dye salt according to claim 1, wherein V is the $>C(CH_3)_2$ group.

7. A dye salt according to claim 1, wherein Y is the —NH- or $—NCH_3$-group.

8. A dye salt according to claim 1, wherein X is the formate, acetate, chloride, sulfate or phosphate ion.

9. A process for spin dyeing polymers of acrylonitrile or copolymers containing predominantly acrylonitrile, wherein a dye salt according to claim 1 is added to the spinning solution.

10. Spin-dyed fibres composed of polymers of acrylonitrile or of copolymers containing predominantly acrylonitrile, which fibres contain a dye salt according to claim 1.

**Revendications**

1. Colorants sels répondant à la formule I

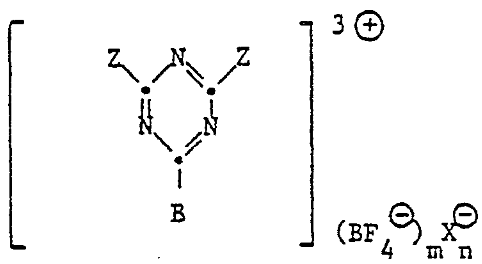

(I)

dans laquelle

Z représente un radical de formule

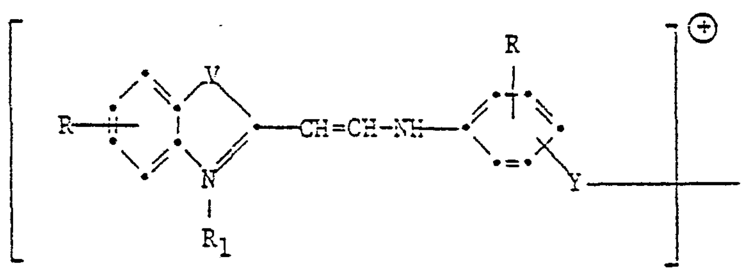

B a la même signification que Z ou représente un radical cationique différent de Z,

R représente l'hydrogène, un alkyle en $C_1$-$C_4$ éventuellement substitué, un alcoxy en $C_1$-$C_4$ éventuellement substitué, un radical $—NO_2$, un radical acylamino éventuellement substitué, un halogène ou un radical —CN,

$R_1$ représente un alkyle en $C_1$-$C_4$ éventuellement substitué ou un alcényle en $C_3$ ou $C_4$,

V représente un atome de soufre ou un radical

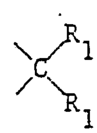

dont les deux radicaux $R_1$ peuvent être unis l'un à l'autre et former ainsi un noyau carbocyclique pentagonal ou hexagonal,

Y représente —NH—, —$NR_1$—, —O— ou —S—,

X représente un anion autre que $BF_4$,

m est un nombre de 1 à 3 et

n est un nombre de 0 à 2,

avec la condition que la somme (m + n) soit égale à 3.

2. Colorants sels selon la revendication 1 caractérisés en ce que les symboles Z et B représentent les radicaux identiques.

3. Colorants sels selon la revendication 1 caractérisés en ce que R représente l'hydrogène, —$CH_3$, —$OCH_3$ ou le chlore.

4. Colorants sels selon la revendication 1 caractérisés en ce que $R_1$ représente un radical alkyle contenant de 1 à 4 atomes de carbone, non substitué et non ramifié.

5. Colorants sels selon la revendication 1 caractérisés en ce que $R_1$ représente un radical —$CH_3$.

6. Colorants sels selon la revendication 1 caractérisés en ce que V représente un radical $>C(CH_3)_2$.

7. Colorants sels selon la revendication 1 caractérisés en ce que Y représente un radical —NH— ou —$NCH_3$—.

8. Colorants sels selon la revendication 1 caractérisés en ce que X représente un ion formiate, acétate, chlorure, sulfate ou phosphate.

9. Procédé pour teindre au filage des polymères de l'acrylonitrile ou des copolymères renfermant une proportion prépondérante d'acrylonitrile, procédé caractérisé en ce qu'on ajoute à la solution de filage un colorant sel selon la revendication 1.

10. Fibres en polymères de l'acrylonitrile, ou en copolymères renfermant une proportion prépondérante d'acrylonitrile, qui ont été teintes au filage, fibres caractérisées en ce qu'elles contiennent un colorant sel selon la revendication 1.